# EUROPÄISCHE PATENTSCHRIFT

(11) **EP 1 663 436 B1**
(45) Veröffentlichungstag und Bekanntmachung des Hinweises auf die Patenterteilung: **02.01.2008**
(21) Anmeldenummer: 04802613.2
(22) Anmeldetag: 22.09.2004
(51) Int. Cl.: B01D 17/04, C02F 1/30, B01J 19/12, C10G 33/02

(54) **VERFAHREN UND ANLAGE ZUR AUFBEREITUNG VON WÄSSRIGEN, ORGANISCHEN EMULSIONEN**
METHOD AND PLANT FOR WORK UP OF AQUEOUS ORGANIC EMULSIONS
PROCEDE ET INSTALLATION POUR LE TRAITEMENT D'EMULSIONS ORGANIQUES AQUEUSES

(30) Priorität: 22.09.2003 DE 10343740
(43) Veröffentlichungstag der Anmeldung: 07.06.2006
(73) Patentinhaber: Ingenieurbüro Gebr. Seyrich GmbH, 01558 Grossenhain (DE); Thom, Dieter, 01259 Dresden (DE)
(72) Erfinder: THOM, Dieter, 01259 Dresden (DE); SOMMER, Jan, 01665 Kleinzadel (DE); SEYRICH, Andreas, 01558 Grossenhain (DE); FISCHER, Roland, 01454 Radeberg (DE)
(74) Vertreter: Hofmann, Klaus
(86) Internationale Anmeldenummer: PCT/DE2004/002147
(87) Internationale Veröffentlichungsnummer: WO 2005/028065

(56) Entgegenhaltungen:
- WO-A-01/12290
- DE-A1- 19 948 405
- US-A- 4 853 507
- US-A- 4 889 639

## Beschreibung

Die Erfindung betrifft ein Verfahren und eine Anlage zur Aufbereitung von wässrigen, organischen Emulsionen, insbesondere die Spaltung von Öl/Fett-Wasser-Gemischen, Altölgemischen, Lösungsmittel-Wasser-Gemischen, Lackschlämmen, Suspensionen und die Abtrennung von Schwermetallen aus den vorgenannten Gemischen. Außerdem ist die Erfindung geeignet, öl- und schwermetallverseuchte Erden und Schlämme aufzubereiten.

Emulsionen als Öl/Fett-Wasser-Gemische fallen in großen Mengen in der metallverarbeitenden Industrie, insbesondere im Maschinen- und Automobilbau sowie im Bergbau an. Die ständig steigenden Anforderungen an moderne, leistungsfähige Emulsionen führte zur Entwicklung sehr stabiler Emulsionen mit hohem Ölgehalt bis ca. 40%, die durch die klassischen Spaltverfahren nicht oder nur mit hohem, ökonomisch nicht zu vertretenden Aufwand spaltbar sind.

Klassische Verfahren zur Emulsionsspaltung sind:

### a) Membranverfahren, speziell die Ultrafiltration

Öl-Wasser-Emulsionen werden durch ein Membranmodul gedrückt. Dabei perkolieren Wasser, kleine Ionen und niedermolekulare organische Stoffe durch die Membran und erscheinen im Permeat. Hochmolekulare Stoffe, Öle und Fette werden zurück gehalten und verbleiben im Retentat. Nachteile dabei sind eine Verstopfung sowie ein chemischer Angriff der Membranen, wodurch eine Neubestückung notwendig wird. Außerdem wird bei Emulsionen mit hohem Ölgehalt ein sehr hoher Energiebedarf erforderlich.

### b) Chemische Spaltverfahren

Durch Zusatz von relativ großen Mengen an Chemikalien, wie Säuren, Basen, organische Spaltmittel oder Salze, werden die Emulsionen in eine Ö1- und Wasserphase gespalten.

Nachteilig ist der zusätzliche Chemikalienaufwand, eine eventuell störende Aufsalzung des Wassers. Reine Spaltsäuren sowie Anlagen aus chemikalienbeständigem Material sind relativ teuer. Es entstehen Entsorgungsprobleme durch Chemikalienreste im abgetrennten Ö1, durch den relativ hohen Schlammanfall sowie durch die Neutralisation des angefallenen Spaltwassers. Es ist eine sehr exakte Dosierung des Spaltmittels notwendig, um eine vollständige Spaltung zu erreichen bzw. um Reemulgierung zu verhindern.

### c) Adsorption

Bei diesem Verfahren werden die Öle bzw. Fette an speziellen Adsorbentien bis zum Erreichen ihrer Beladungskapazität angelagert. Diese relativ teure Anwendung ist nur für kleine Emulsionsmengen mit geringem Ölanteil sinnvoll.

### d) Verdampfung

Durch Aufheizen der Emulsion wird der Wasseranteil verdampft und die Restflüssigkeit mit entsprechenden Mitteln eingedickt. Wegen erhöhter Restölgehalte ist Nachbehandlung des Permeats notwendig. Es entstehen hohe Investitions- und Betriebskosten. Ohne eine zusätzliche Vorstufe, z.B. eine Ultrafiltration, ist eine Verdampfung in der Regel nicht wirtschaftlich.

### e) Koaleszenz

Hier erfolgt eine Vereinigung von koagulierten Flüssigkeitströpfchen zu einer kompakten Flüssigkeitsphase bzw. eine Abscheidung freier Öle aus instabilen Öl in Wasser-Emulsionen. Ein ölfreies Wasser wird nur bei Einsatz von ölarmen Emulsionen mit einem Ölgehalt < 1 g/l erhalten.

### f) Chemische Emulsionsspaltung - Flotation

Die Flotation dient lediglich zur Separierung von Öl und Wasser aus einer bereits gespaltenen Emulsion durch Einleiten von Luft. Das Restwasser muss wegen des relativ hohen Ölgehaltes "nachgeflockt" werden. Es fallen ölhaltige Metallhydroxidschlämme an.

Eine Behandlung von Öl/Wasser-Emulsionen mit Mikrowellen ist in US 4,889,639 und GB 2 117 370 A beschrieben. Dabei erfolgt eine direkte Bestrahlung durch Mikrowellen im Durchflussverfahren mit sehr hohen Energiemengen. Die zu behandelnden Stoffe sind Öl/Wasser-Gemische, die bei der Erdölförderung durch Einpressen von Wasser entstehen. Es handelt sich um keine sehr stabilen Emulsionen, wie sie beispielsweise durch Zusatz von Emulgatoren entstehen.

DE 199 48 405 A1 beschreibt eine Methode zur Ablösung von Belägen und Inkrustationen in Wasseranlagen.

Aufgabe der Erfindung ist die Entwicklung eines Verfahrens sowie einer Anlage, mit denen eine sichere und hinsichtlich Kosten und Aufwand günstige Aufbereitung von wässrigen, organischen Emulsionen erreicht werden kann. Dabei sollen auch besonders stabile Emulsionen behandelbar sein. Die Verwendung von Chemikalien soll weitgehend eingeschränkt oder es soll darauf ganz verzichtet werden. Im Ergebnis der Behandlung sollen die abgetrennten Bestandteile einen hohen Reinheitsgrad besitzen und ohne oder mit nur geringem Aufwand für eine Nachbehandlung verwertbar sein.

Die Aufgabe wird erfindungsgemäß durch die Merkmale des Verfahrensanspruchs 1 sowie des Sachanspruchs 7 gelöst. Ausgestaltende Merkmale sind in den Unteransprüchen 2 bis 6 und 8 bis 17 angegeben.

Zur Aufbereitung der wässrigen, organischen Emulsionen wird die zu behandelnde Emulsion zunächst in einem, möglichst metallischen, Reaktionsgefäß homogenisiert. Danach wird sie indirekt einer Mikrowellens Strahlung ausgesetzt, ruhen gelassen und anschließend die Wasserphase vom abgesetzten Schlamm und von der aufschwimmenden organischen Phase getrennt.

Die elektromagnetische Bestrahlung erfolgt in einem separaten Gerät, welches mit dem Reaktionsgefäß lediglich über eine offene Rohrleitung verbunden ist. Es wird nun intervallmäßig zu behandelnde Emulsion aus dem Reaktionsgefäß oder Frischwasser in das die elektromagnetische Strahlung erzeugende Gerät eingeleitet und dort einer Bestrahlung ausgesetzt. Diese Art der Bestrahlung, wird in mehreren intervallen von mindestens jeweils 10 min. durchgeführt. Dabei schaltet die elektromagnetische Strahlungsquelle automatisch ab und wieder zu. Es erfolgt weder eine Durchleitung noch eine direkte Bestrahlung der zu behandelnden Emulsionen, sondern es wird lediglich eine offene Verbindung zwischen einer bestrahlten Flüssigkeitsmenge und der zu behandelnden Emulsion hergestellt.

Zusätzlich kann in das die elektromagnetische Strahlung erzeugende Gerät Schwefelsäure zugegeben werden.

Für die Verbesserung der Effektivität der Behandlung kann es von Vorteil sein, wenn die Leitfähigkeit der zu behandelnden Emulsion durch Salzzugabe erhöht und/oder das Medium bis maximal 100°C aufgeheizt wird. Auch sollte der pH-Wert auf einen Bereich zwischen 1 und 7 eingestellt werden.

Die erfindungsgemäße Anlage ist gekennzeichnet durch ein Gerät, in dem mittels eines Magnetrons elektromagnetische Wellen erzeugt werden, die in Richtung eines geschlossenen, gläsernen Erregergefäßes strahlen. Überraschenderweise wurden bei der Verwendung von Borosilikatglas besondere Aufbereitungseffekte erreicht. In dieses Erregergefäß mündet das Ende einer Rohrleitung, die bis in einen Reaktionsbehälter reicht, in dem sich die zu behandelnde Emulsion befindet.

Im Reaktionsbehälter kann sich eine Umwälzeinrichtung und/oder eine Heizung befinden. Eine Homogenisierung sowie eine Behandlung unter erhöhten Temperaturen kann zu einer Beschleunigung der Aufbereitungseffekte führen.

Es hat sich gezeigt, dass es vorteilhaft ist, wenn die Rohrleitung zwischen dem Erreger- und dem Reaktionsgefäß und/oder das Reaktionsgefäß selbst elektrisch leitend ist. Die Rohrleitung selbst sollte bis etwa in die Mitte des Reaktionsbehälters reichen. Das Ende der Rohrleitung im Erregergefäß sollte als Metallrohr ausgebildet sein, innerhalb dem sich ein zweites Metallrohr mit einem kleineren Durchmessers befindet, wobei das innere Metallrohr mit dem äußeren Metallrohr ringförmig verbunden und kürzer als das äußere Metallrohres ausgebildet ist.

Im inneren Metallrohr sollte eine Metallantenne befestigt sein, die bis über das Ende des Metallrohres hinausragt. Das Ende des Metallrohres kann am Umfang mit einem Edelstahlgitter umgeben sein, welches wiederum über das Ende des Metallrohres hinausragt.

Das Erregergefäß kann an einen Frischwasserbehälter angeschlossen sein. Eine entsprechende Zulaufleitung wird entweder direkt in das Erregergefäß oder in die außerhalb liegende Zulaufleitung geführt.

Nachfolgend wird die Erfindung an einem Ausführungsbeispiel näher erläutert. Es zeigen:

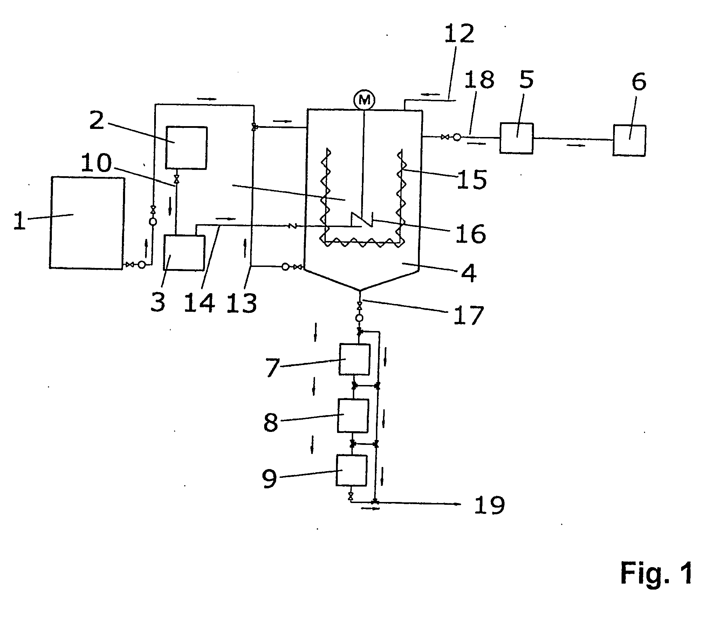

- Fig. 1: Verfahrensprinzip einer Aufbereitungsanlage
- Fig. 2: Erregergefäß mit Magnetron

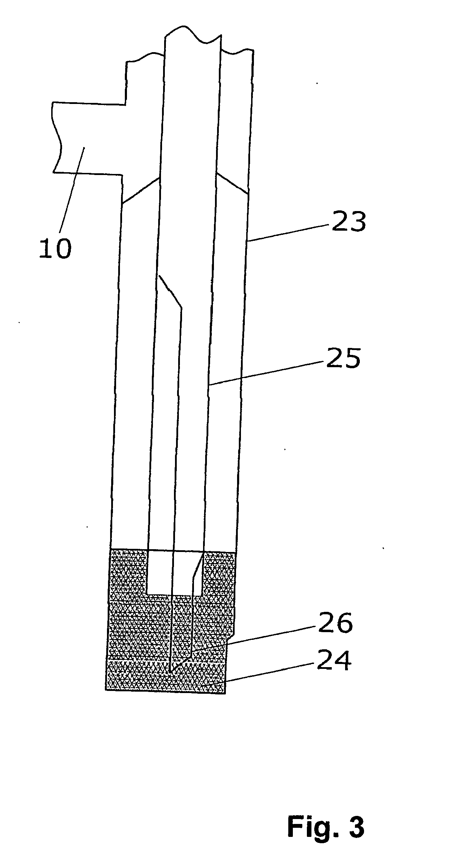

- Fig. 3: Rohrende innerhalb des Erregergefäßes

Es besteht die Zielsetzung, ein bei der Benzinherstellung aus Kohle abfallendes Öl-Wasser-Feststoff-Gemisch, so aufzubereiten, dass es in seine einzelnen Phasen aufgespalten und mit geringem Aufwand weiterbehandelt, entsorgt bzw. verwertet werden kann.

Zunächst wird die zu behandelnde Emulsion, welche etwa einen Wasseranteil von 65% besitzt, in einem Vorratsbehälter 1 gesammelt und über eine Zulaufleitung einem metallischen Reaktionsbehälter 4 zugeleitet. In diesem, etwa 10 m³ fassenden Reaktionsbehälter 4 wird die Emulsion mittels eines Rührwerkes 16 homogenisiert. Über eine Chemikalienzugabeleitung 12 werden 1 kg Salz je m³ Ö1-Wasser-Gemisch in gelöster Form zugegeben. Gleichzeitig erfolgt eine Umwälzung mittels einer Umwälzeinrichtung 13. Eine im Reaktionsbehälter 4 befindliche Heizung 15 erwärmt das Gemisch bis auf eine Temperatur von ca. 60°C. Nach Erreichen dieser Temperatur wird die zu behandelnde Emulsion einer 4-stündigen elektromagnetischen Strahlung ausgesetzt, die in einem speziell entwickelten Gerät 3 erzeugt wird. Dazu führt eine metallische Rohrleitung 14 etwa von der Mitte des Reaktionsbehälters 4 bis in das elektromagnetische Wellen erzeugende Gerät 3.

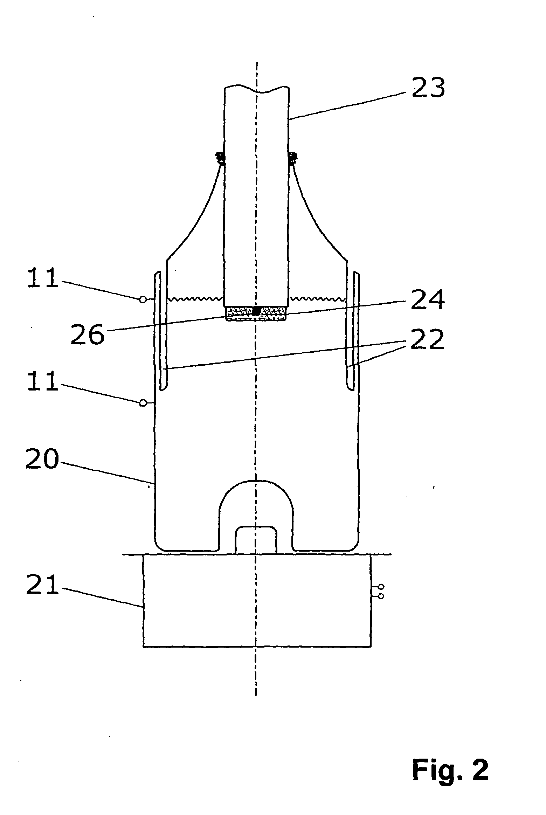

Das Gerät 3 besteht aus einem gläsernen, flaschenförmigen Erregergefäß 20, dessen Boden nach innen gewölbt ist. Das Erregergefäß selbst besteht aus Borosilikatglas 3.3. In diese Wölbung greift ein Magnetron 21 mit einer Leistung von 650 W ein. Die Austrittsöffnung der Mikrowellen des Magnetrons 21 ist in Richtung Erregergefäß 20 gerichtet. Das Erregergefäß 20 ist durch ein in der Fig. 2 nicht dargestelltes Metallgehäuse abgeschirmt. Damit wird die Strahlung des Magnetrons 21 in die Umgebung des Gerätes 3 vermieden. Das Magnetron 21 ist an ein elektrisches Schaltsystem mit einem Transformator, Kondensator, Lüfter, Schalter und Sicherungen angeschlossen und verkabelt. Die elektrische Speisung erfolgt über ein externes Stromnetz. Die elektrische Verkabelung des Magnetrons 21 mit den anderen Bauteilen, wie Transformator usw., erfolgt ähnlich wie bei den handelsüblichen Mikrowellen. Die einzelnen elektrischen Bauteile sind elektrisch und thermisch abgesichert. Dies kann z.B. durch Thermomikroschalter erfolgen. An der Oberseite des Erregergefäßes 20 ragt ein kupfernes Metallrohr 23 bis in das Innere des Erregergefäßes 20 hinein. Dabei ist das Metallrohr 23 zum und am Erregergefäß 20 abgedichtet.

Das Ende dieses Metallrohres 23 ist doppelwandig ausgeführt, d.h. innerhalb des Metallrohrendes ist mittig ein weiteres inneres kupfernes Metallrohr 25 mit einem kleineren Durchmesser angeordnet. Das untere Ende des inneren Metallrohres 25 endet vor dem Ende des äußeren Metallrohres 23.

Das innere Metallrohr 25 trägt eine Antenne 26 aus Silber. Diese Antenne 26 ist mit ihren Enden an den Innenseiten des inneren Metallrohres 25 befestigt und ragt mit einer Schlaufe bis über das Ende des äußeren Metallrohres 23 hinaus. Das obere Ende des inneren Metallrohres 25, also in Richtung Oberseite des Erregergefäßes 20, besitzt eine ringförmige, wasserdichte Verbindung aus Kupfer zum äußeren Metallrohr 23. Am Ende des äußeren Metallrohres 23 befindet sich am gesamten Umfang ein Edelstahlgitter 24. Dieses Edelstahlgitter 24 kann innen oder außen am Metallrohr 23 befestigt sein und überragt das Rohrende des Metallrohres 23.

Das Erregergefäß 20 besitzt vorteilhafterweise mindestens eine in einem innerhalb des Erregergefäßes 20 eingeschweißten Glasrohr eingelegte Thermo-Schmelzsicherung 22 zur Begrenzung einer maximalen Arbeitstemperatur des Erregergefäßes 20. Ein Pegelschalter, gekoppelt mit zwei am Erregergefäß 20 seitlich unterhalb der Schlaufe der Silberantenne 26 angeordneten Kontakten 11 zur Messung der Füllstandshöhe sorgt für einen in Grenzen gehaltenen Wasserstand innerhalb des Erregergefäßes 20. Der Wasserstand kann über eine Zulaufleitung 10 von einem Frischwasserbehälter 2 ausgeglichen werden. Entsprechende Sicherheitsschaltungen verhindern den Betrieb des Gerätes 3 ohne Wasserfüllung des Erregergefäßes 20.

Bei hochviskosen oder wasserarmen Gemischen kann das Erregergefäß 20 statt mit zu behandelndem Gemisch über die Zulaufleitung 10 mit Frischwasser aus dem Frischwasserbehälter 2 gefüllt werden.

Die Funktionsweise des Gerätes 3 ist dabei wie folgt:

Das Erregergefäß 20 wird mit dem zu behandelnden Gemisch gefüllt, wobei mittels eines Druckminderers ein Überdruck zwischen 0,8 bis 1,3 bar im Erregergefäß 20 eingestellt wird. Anschließend wird das Magnetron 21 mittels eines elektrischen Schaltsystems eingeschaltet, wodurch die Flüssigkeit im Erregergefäß 20 erhitzt und verdampft wird und im oberen Bereich des Erregergefäßes 20 durch den Wasserdampf verdrängt wird und sich eine Wasserdampfglocke bildet. Hierbei treten bereits vereinzelt Gasbläschen in das Metallrohr 23 ein und gelangen über die Rohrleitung 14 in den Reaktionsbehälter 4. Wenn der Flüssigkeitsstand im Erregergefäß 20 das Rohrende des Rohres 23 erreicht, treten nun vermehrt Gasbläschen in die Rohrleitung 14 ein. Durch einen Pegelschalter wird intervallmäßig automatisch immer wieder Gemisch in das Erregergefäß 20 zugeführt, um den Flüssigkeitsstand kurz über dem Rohrende oder kurz unter dem Rohrende des Metallrohres 23 zu halten. Hierzu dienen die Kontakte zur Messung der Füllstandshöhe 11 im Erregergefäß 20.

Nach dem indirekten Einwirken der elektromagnetischen Strahlung wird die Emulsion etwa 12 Stunden ruhen gelassen. In dieser Zeit setzen sich die enthaltenen Feststoffe auf den Boden des Reaktionsbehälters 4 als Schlamm ab. Die Feststoffe werden über einen Ablauf 17 abgezogen und entsorgt. Die aus dem Ausgangsprodukt abgetrennten und sich nun im abgesetzten Schlamm befindlichen Sedimente enthalten einen Großteil der ehemals enthalten Schwermetalle. Messungen haben gezeigt, dass die erfindungsgemäße Behandlung eine außerordentlich starke Reduktion von Schwermetallen ermöglicht.

Nach dem Ablauf des Feststoffschlammes wird die Wasserphase abgelassen. Je nach Gehalt an Schwebstoffen oder organischen Bestandteilen kann eine Nachbehandlung mittels einer Filtration 7 (Mikro-, Ultra-, Nanofiltration), einer chemischphysikalischen Behandlung 8, einer Behandlung in einer mechanisch-biologischen Kläranlage 9 und ein anschließender Ablauf in einen Vorfluter 19 erfolgen.

Die leichteren Ölbestandteile schwimmen auf. Sie besitzen dabei lediglich noch einen Wasseranteil von etwa 5%. Über eine Öl-Abflussleitung 18 kann das abgetrennte Öl einer Ölnachbehandlung 5 bzw. einer Ölverwertung 6 zugeführt werden.

Es hat sich gezeigt, dass die vorliegende Erfindung mit sehr geringem Aufwand und unter Verwendung nur geringer Mengen an Energie und Chemikalien zu einer sehr effektiven Aufbereitung von sonst nur schwer trennbaren Emulsionen geeignet ist.

### Bezugszeichenaufstellung

- 1: Vorratsbehälter
- 2: Frischwasserbehälter
- 3: Gerät
- 4: Reaktionsbehälter
- 5: Ölnachbehandlung
- 6: Ölverwertung
- 7: Filtration
- 8: chemisch-physikalische Behandlung
- 9: Kläranlage
- 10: Zulaufleitung
- 11: Kontakte
- 12: Chemikalienzugabeleitung
- 13: Umwälzeinrichtung
- 14: Rohrleitung
- 15: Heizung
- 16: Rührwerk
- 17: Ablauf zur Nachbehandlung
- 18: Öl-Abflussleitung
- 19: Ablauf in Vorfluter
- 20: Erregergefäß
- 21: Magnetron
- 22: Thermosicherung
- 23: Metallrohr
- 24: Edelstahlgitter
- 25: inneres Metallrohr
- 26: Antenne

## Patentansprüche

1. Verfahren zur Aufbereitung von wässrigen, organischen Emulsionen, bei dem
- die zu behandelnde Emulsion in einem Reaktionsgefäß homogenisiert wird, welches über eine offene Rohrleitung mit einem separaten Erregergefäß verbunden ist,
- zu behandelnde Emulsion aus dem Reaktionsgefäß und/oder Frischwasser intervallmäßig in das Erregergefäß eingeleitet, dort mit mittels eines Magnetrons erzeugten Mikrowellen bestrahlt und **dadurch** verdampft wird,
- der erzeugte Dampf über die offene Rohrleitung in das Reaktionsgefäß geleitet und mit der zu behandelnde Emulsion in Kontakt gebracht wird,
- die so behandelte Emulsion ruhen gelassen wird und
- anschließend die Wasserphase vom abgesetzten Schlamm und von der aufschwimmenden organischen Phase getrennt werden.

2. Verfahren nach Anspruch 1, **dadurch gekennzeichnet, dass** die Bestrahlung in mindestens 2 Intervallen von jeweils mehr als 10 Minuten durchgeführt wird.

3. Verfahren nach einem der Ansprüche 1 oder 2, **dadurch gekennzeichnet, dass** die Leitfähigkeit der zu behandelnden Emulsion durch Zugabe von Salz erhöht wird.

4. Verfahren nach einem der Ansprüche 1 bis 3, **dadurch gekennzeichnet, dass** in das die elektromagnetische Strahlung erzeugende Gerät Schwefelsäure zugegeben wird.

5. Verfahren nach einem der Ansprüche 1 bis 4, **dadurch gekennzeichnet, dass** die zu behandelnde Emulsion auf eine Temperatur bis maximal 100°C aufgeheizt wird.

6. Verfahren nach einem der Ansprüche 1 bis 5, **dadurch gekennzeichnet, dass** der pH-Wert der zu behandelnden Emulsion zwischen 1 und 7 eingestellt wird.

7. Anlage zur Durchführung eines Verfahrens nach Anspruch 1, **dadurch gekennzeichnet, dass** von einem Reaktionsbehälter (4) mit zu behandelnder Emulsion eine Rohrleitung (14) in ein Gerät (3) mit einem Erregergefäß (20) mündet, in dem sich zu behandelnde Flüssigkeit und/oder Frischwasser befindet, wobei im Gerät (3) mittels eines Magnetrons (21) Mikrowellen erzeugt werden, die in Richtung des geschlossenen, gläsernen Erregergefäßes (20) strahlen.

8. Anlage nach Anspruch 7, **dadurch gekennzeichnet, dass** das Erregergefäß (20) aus Borosilikatglas besteht.

9. Anlage nach Anspruch 7 oder 8, **dadurch gekennzeichnet, dass** sich im Reaktionsbehälter (4) eine Umwälzeinrichtung (13) befindet.

10. Anlage nach einem der Ansprüche 7 bis 9, **dadurch gekennzeichnet, dass** sich im Reaktionsbehälter (4) eine Heizung (15) befindet.

11. Anlage nach einem der Ansprüche 7 bis 10, **dadurch gekennzeichnet, dass** die Rohrleitung (14) elektrisch leitend ist.

12. Anlage nach einem der Ansprüche 7 bis 11, **dadurch gekennzeichnet, dass** der Reaktionsbehälter (4) elektrisch leitend ist.

13. Anlage nach einem der Ansprüche 7 bis 12, **dadurch gekennzeichnet, dass** die Rohrleitung (14) bis etwa in die Mitte des Reaktionsbehälters (4) reicht.

14. Anlage nach einem der Ansprüche 7 bis 13, **dadurch gekennzeichnet, dass** das Ende der Rohrleitung (14) im Erregergefäß (20) als Metallrohr (23) ausgebildet ist, innerhalb dem sich ein zweites Metallrohr (25) kleineren Durchmessers befindet, wobei das innere Metallrohr (25) mit dem äußeren Metallrohr (23) ringförmig verbunden und kürzer als das äußere Metallrohr (23) ausgebildet ist.

15. Anlage nach Anspruch 14, **dadurch gekennzeichnet, dass** im inneren Metallrohr (25) eine Metallantenne befestigt ist, die bis über das Ende des Metallrohres (23) hinausragt.

16. Anlage nach einem der Ansprüche 14 oder 15, **dadurch gekennzeichnet, dass** das Ende des Metallrohres (23) am Umfang mit einem Edelstahlgitter (24) umgeben ist, welches über das Ende des Metallrohres (23) hinausragt.

17. Anlage nach einem der Ansprüche 7 bis 16, **dadurch gekennzeichnet, dass** das Erregergefäß (20) an einen Frischwasserbehälter (2) angeschlossen ist.

## Claims

1. Method of processing aqueous organic emulsions, in which
- the emulsion to be treated is homogenized in a reaction vessel which is connected via an open pipe to a separate excitation vessel,
- the emulsion to be treated from the reaction vessel and/or fresh water is introduced at intervals into the excitation vessel, there irradiated with microwaves generated by means of a magnetron and thereby vaporized,
- the vapour generated is passed via the open pipe to the reaction vessel and brought into contact with the emulsion to be treated,
- the emulsion thus treated is allowed to stand and
- subsequently the water phase is separated from the settled sludge and the floating organic phase.

2. Method according to Claim 1, **characterized in that** the irradiation is carried out in at least two intervals each of more than 10 minutes.

3. Method according to one of Claims 1 or 2, **characterized in that** the conductivity of the emulsion to be treated is increased by addition of salt.

4. Method according to one of Claims 1 to 3, **characterized in that** sulphuric acid is added to the apparatus producing the electromagnetic radiation.

5. Method according to one of Claims 1 to 4, **characterized in that** the emulsion to be treated is heated to a temperature of a maximum of 100°C.

6. Method according to one of Claims 1 to 5, **characterized in that** the pH of the emulsion to be treated is set between 1 and 7.

7. Plant for carrying out a method according to Claim 1, **characterized in that**, from a reaction vessel (4) containing emulsion to be treated, a pipe (14) opens out into an apparatus (3) having an excitation vessel (20) in which liquid to be treated and/or fresh water is situated, wherein, in the apparatus (3), microwaves are generated by means of a magnetron (21), which microwaves radiate in the direction of the closed glass excitation vessel (20).

8. Plant according to Claim 7, **characterized in that** the excitation vessel (20) consists of borosilicate glass.

9. Plant according to Claim 7 or 8, **characterized in that**, in the reaction vessel (4), a circulation unit (13) is situated.

10. Plant according to one of Claims 7 to 9, **characterized in that**, in the reaction vessel (4), a heater (15) is situated.

11. Plant according to one of Claims 7 to 10, **characterized in that** the pipe (14) is electrically conductive.

12. Plant according to one of Claims 7 to 11, **characterized in that** the reaction vessel (4) is electrically conductive.

13. Plant according to one of Claims 7 to 12, **characterized in that** the pipe (14) extends to about the centre of the reaction vessel (4).

14. Plant according to one of Claims 7 to 13, **characterized in that** the end of the pipe (14) in the excitation vessel (20) is constructed as a metal pipe (23), within which a second metal pipe (25) of smaller diameter is situated, wherein the inner metal pipe (25) is connected in a ring shape with the outer metal pipe (23) and is constructed to be shorter than the outer metal pipe (23).

15. Plant according to Claim 14, **characterized in that**, in the inner metal pipe (25), a metal aerial is fixed, which extends to beyond the end of the metal pipe (23).

16. Plant according to one of Claims 14 or 15, **characterized in that** the end of the metal pipe (23) is surrounded at the periphery by a stainless steel mesh (24) which extends beyond the end of the metal pipe (23).

17. Plant according to one of Claims 7 to 16, **characterized in that** the excitation vessel (20) is connected to a freshwater vessel (2).

## Revendications

1. Procédé en vue du traitement d'émulsions organiques aqueuses, lors duquel
- l'émulsion à traiter est homogénéisée dans un réacteur, qui est relié, par l'intermédiaire d'un conduit tubulaire ouvert, à un récipient d'excitation séparé,
- l'émulsion à traiter en provenance du réacteur et/ou de l'eau fraîche sont introduites par intervalles dans le récipient d'excitation, y sont irradiées à l'aide de micro-ondes produites par l'intermédiaire d'un magnétron et y sont ainsi évaporées,
- la vapeur produite est conduite, par l'intermédiaire du conduit tubulaire ouvert, dans le réacteur et est mise en contact avec l'émulsion à traiter et
- l'émulsion ainsi traitée est laissée au repos et
- la phase aqueuse est ensuite séparée de la boue déposée et de la phase organique surnageante.

2. Procédé selon la revendication 1, **caractérisé en ce que** l'irradiation est effectuée au cours d'au moins 2 intervalles de temps d'à chaque fois plus de 10 minutes.

3. Procédé selon l'une quelconque des revendications 1 ou 2, **caractérisé en ce que** la conductibilité de l'émulsion à traiter est augmentée par addition de sel.

4. Procédé selon l'une quelconque des revendications 1 à 3, **caractérisé en ce que** l'on ajoute de l'acide sulfurique dans l'appareil produisant le rayonnement électromagnétique.

5. Procédé selon l'une quelconque des revendications 1 à 4, **caractérisé en ce que** l'émulsion à traiter est échauffée à une température allant au maximum jusqu'à 100°C.

6. Procédé selon l'une quelconque des revendications 1 à 5, **caractérisé en ce que** la valeur de pH de l'émulsion à traiter est réglée à une valeur comprise entre 1 et 7.

7. Installation en vue de l'exécution d'un procédé selon la revendication 1, **caractérisée en ce qu'**à partir du réacteur (4) avec l'émulsion à traiter débouche un conduit tubulaire (14) dans un appareil (3) avec un récipient d'excitation (20), dans lequel se trouvent le liquide à traiter et/ou de l'eau fraîche, des micro-ondes étant produites dans l'appareil (3) à l'aide d'un magnétron (21), lesquelles micro-ondes rayonnent en direction du récipient d'excitation clos, fabriqué en verre (20).

8. Installation selon la revendication 7, **caractérisée en ce que** le récipient d'excitation (20) est constitué en verre de borosilicate.

9. Installation selon la revendication 7 ou 8, **caractérisée en ce que** dans le réacteur (4) se trouve un équipement de mise en circulation (13).

10. Installation selon l'une quelconque des revendications 7 à 9, **caractérisée en ce que** dans le réacteur (4) se trouve un dispositif de chauffage (15).

11. Installation selon l'une quelconque des revendications 7 à 10, **caractérisée en ce que** le conduit tubulaire (14) est conducteur de l'électricité.

12. Installation selon l'une quelconque des revendications 7 à 11, **caractérisée en ce que** le réacteur (14) est conducteur de l'électricité.

13. Installation selon l'une quelconque des revendications 7 à 12, **caractérisée en ce que** le conduit tubulaire (14) va jusqu'à environ au milieu du réacteur (14).

14. Installation selon l'une quelconque des revendications 7 à 13, **caractérisée en ce que** l'extrémité du conduit tubulaire (14) est formée dans le récipient d'excitation (20) en tant que tube métallique (23), au sein duquel se trouve un deuxième tube métallique (25) d'un diamètre plus petit, le tube métallique interne (25) étant relié sous forme annulaire au tube métallique externe (23) et étant formé de façon plus courte que le tube métallique externe (23).

15. Installation selon la revendication 14, **caractérisée en ce que** dans le tube métallique interne (25) est fixée une antenne métallique, qui fait saillie jusqu'au-delà de l'extrémité du tube métallique (23).

16. Installation selon l'une quelconque des revendications 14 ou 15, **caractérisée en ce que** l'extrémité du tube métallique (23) est entourée sur la périphérie d'une grille en acier inoxydable (24), qui fait saillie au-delà de l'extrémité du tube métallique (23).

17. Installation selon l'une quelconque des revendications 7 à 16, **caractérisée en ce que** le récipient d'excitation (20) est raccordé à un récipient d'eau fraîche (2).
